# EUROPÄISCHE PATENTSCHRIFT

(11) **EP 2 768 717 B1**
(45) Veröffentlichungstag und Bekanntmachung des Hinweises auf die Patenterteilung: **15.06.2016**
(21) Anmeldenummer: 12769907.2
(22) Anmeldetag: 11.09.2012
(51) Int. Cl.: B62D 5/04, F16H 25/24, F16C 27/04, F16C 25/08, F16C 27/06

(54) **ELEKTROMECHANISCHE KRAFTFAHRZEUGLENKUNG**
ELECTROMECHANICAL MOTOR VEHICLE STEERING SYSTEM
DIRECTION ÉLECTROMÉCANIQUE DE VÉHICULE À MOTEUR

(30) Priorität: 18.10.2011 DE 102011116058
(43) Veröffentlichungstag der Anmeldung: 27.08.2014
(73) Patentinhaber: ThyssenKrupp Presta AG, 9492 Eschen (LI)
(72) Erfinder: KIFORIUK, Alexander, 73061 Ebersbach (DE); KONTNER, Dennis, 73033 Göppingen (DE); LASZLO, Gergely, 73734 Esslingen-Berkheim (DE)
(74) Vertreter: Lenzing Gerber Stute
(86) Internationale Anmeldenummer: PCT/EP2012/003809
(87) Internationale Veröffentlichungsnummer: WO 2013/056770

(56) Entgegenhaltungen:
- EP-A2- 1 920 993
- DE-A1-102004 034 701
- DE-A1-102010 002 958
- US-B1- 6 499 369

## Beschreibung

Die vorliegende Erfindung betrifft eine Servolenkung, insbesondere für ein Kraftfahrzeug, mit einem Servomotor, der ein axial verlagerbares Bauelement über eine in einem Gestell drehbar, aber axial unverschiebbar gelagerte Mutter antreibt, nach dem Oberbegriff des Anspruchs 1. Bei Lenkungen mit einem elektromotorischen Servoantrieb, der über einen Kugelgewindetrieb wirkt, wird die Kugelmutter entweder starr im Gehäuse gelagert oder durch Einsatz von Federelementen und besondere Gestaltung des Gehäuses oder des Lagers eine gewisse Längs- und Kippbewegung ermöglicht. Eine sphärische Lagerung, bei der sowohl der Lagerring als auch das Gestell eine kugelige Fläche aufweisen, ist ebenfalls bekannt. Bei dieser Lösung ist der Mittelpunkt der Kugelfläche in der Mittelebene des Lagers konstruktiv festgelegt. Ähnliche Funktionen werden von Tonnenlagern und Pendelrollenlagern ermöglicht, die einen Winkelfehler der Welle zulassen. Das Ziel dieser Lagerungen ist der Toleranzausgleich, wodurch Verspannungen des Kugelgewindetriebs vermieden werden. Weiter wird die dynamische und statische Belastung der Bauteile reduziert. Es ergeben sich verbesserte akustische Eigenschaften und die Reduktion des mechanischen Spiels, das durch Wärmeausdehnung der Komponenten entsteht.

Bei der beschriebenen Lagerung zwischen Kugelflächen tritt ebenso wie bei der Verwendung von Tonnenlagern und Pendellagern das Problem auf, dass diese Lagerungen eher für Radialkräfte ausgelegt sind. Die in einem elektrisch unterstützten Lenkgetriebe an der Kugelmutter auftretenden Lasten sind jedoch bezüglich der Zahnstange oder Gewindespindel hauptsächlich axial gerichtet.

Die DE 103 10 492 A1 beschreibt eine Servolenkung, insbesondere für Kraftfahrzeuge, mit einem als Elektromotor gebildeten Servomotor, der ein als Schubstange ausgebildetes, axial verlagerbares Bauelement übereine in einem als Lenkungsgehäuse gebildeten Gestell drehbar, aber axial unverschiebbar gelagerte Mutter antreibt. Der Servomotor, die Schubstange und die Mutter sind mittels eines exzentrischen Lagerringes derart gelagert, dass der Achsabstand zwischen der Motorweile des Servomotors und der Schubstange variierbar ist, was eine einfache, rasche Montage der Servolenkung ermöglicht.

Aus der DE 102 02 483 A1 ist eine elektrische Lenkvorrichtung bekannt, die eine Zahnstange aufweist, die mit einer Lenkspindel verbunden ist, einen Motor zum Unterstützen einer Lenkkraft mit einem koaxial auf der Zahnstange angeordneten Rotor, einen Spindeltrieb, bei dem Kugeln zwischen einer mit dem Rotor verkeilten Mutter und einer auf der Zahnstange gebildeten Schraube eingelegt sind, und die ein Gehäuse aufweist, das insgesamt näherungsweise zylindrisch gestaltet ist. Die Mutter des Kugelumlaufspindelmechanismusses ist drehbar in einem Lager im Inneren des Muttergehäuseabschnittes gelagert.

In der DE 1947337 U ist ein elastisches Wälzlager dargestellt, welches eine axiale Beweglichkeit und eine axiale Federung mit Rückstellkraft aufweist. Ein Wälzlager mit einem Lageraußenring und einem Lagerinnenring, wobei der Lageraußenring und /oder der Lagerinnenring jeweils zwischen mindestens einem Dämpfungselement angeordnet ist, ist aus der DE 10 2004 034 701 A1 bekannt.

Die EP 1 571 067 A1 offenbart die elastische Lagerung einer Schneckenwelle die koaxial die Motorweile eines Servomotors umgreift.

Die gattungsgemäße EP 2 049 383 81 zeigt eine Lösung, um die Schwenkbarkeit des Radiallagers zu ermöglichen bzw. zu verbessern. Es ist vorgesehen, eine konvexe Wölbung an dem Außenumfang des Außenrings vorzusehen oder die Mutter, auf der der Innenring sitzt, mit einer konvexen Wölbung zu versehen. aufweist. Durch die konvexe Wölbung des Außenumfangs des Außenrings oder der Mutter soll eine Freistellung des Radiallagers und eine Verschwenkbarkeit der Mutter und des axial verlagerbaren Bauelements erreicht werden. An jeder Stirnseite des Radiallagers ist ein Stahlring mit einem aufvulkanisierten Element mit elastomeren Eigenschaften vorgesehen, welches bei wechselnden Lasten eine axiale und radiale Dämpfung sowie die Durchführung und Dämpfung der Schwenkbewegung des axial verlagerbaren Bauelements ermöglichen soll. Bei Biegemomentbeanspruchung des axial verlagerbaren Bauelements soll ein Verspannen des Systems vermieden werden. Die Herstellung der verwendeten Bauelemente und deren die Montage ist aufwändig.

Die DE10 2010 002958 A1 offenbart ein Wälzlager dessen Außenring in zwei Ringteile geteilt ist, die axial gegeneinander mit Wellfedern gefedert sind. Die Kontaktfläche des Außenrings mit dem Gestell ist aufgrund der Ausbildung des Außenrings schmal. Bei dem erfindungsgemäßen Lager hingegen ist die Kontaktfläche schmal, weil sie als umlaufende Rippe des Lagersitzes oder linienförmig mittels einer konvexen, nach innen zu dem Lager weisenden Oberfläche des Lagersitzes ausgebildet ist.

Der Erfindung liegt daher die Aufgabe zugrunde, eine Servolenkung mit einer verkippbaren Lagerung der Kugelmutter zu schaffen, die mit einfacheren Bauelementen realisierbar ist und die einfach zu montieren ist. Diese Aufgabe wird mit einer Servolenkung mit den Merkmalen des Anspruchs 1 gelöst.

Weil bei der Servolenkung mit einem Servomotor, der ein axial verlagerbares Bauelement über eine in einem Gestell drehbar in einem Lager gelagerte Mutter antreibt, wobei die Mutter mit einer an dem Bauelement ausgebildeten Gewindespindel in Eingriff steht und über das Lager in Axialrichtung mittels Federelementen elastisch gegenüber dem Gestell sowie in Radialrichtung entlang einer schmalen umlaufenden Kontaktfläche an dem Gestell abgestützt ist, die Federelemente als Wellfedern ausgebildet sind, wird eine axiale Anfederung des Lagers und damit auch der Mutter mit sehr einfachen, preiswerten und in der Praxis erprobten Bauelementen möglich.

Wenn zwischen den Federelementen und dem Gestell Anlaufscheiben angelegt sind, kann das Gestell, welches üblicherweise das Lenkungsgehäuse oder Teile davon umfasst, aus einer Leichtmetalllegierung hergestellt werden. Die Anlaufscheiben verhindern, dass die bei Benutzung arbeitenden Wellfedern sich in das Leichtmetall einarbeiten. Eine direkte Abstützung des Lageraußenrings gegenüber dem Gestell ergibt sich, wenn die Wellfedern jeweils an jeder Seite des Lagers zwischen dem Außenring des Lagers und einem Ringbund des Gestells angeordnet sind. Das Gestell kann ein Gehäuse und einen Gehäusedeckel umfassen, wobei einer der Ringbunde an dem Gehäusedeckel ausgebildet ist und wobei der andere Ringbund an dem Gehäuse oder an einer in das Gehäuse einführbaren Hülse ausgebildet ist. Die Ausführungsform mit der separaten, in das Gehäuse einführbaren Hülse ist einfacher zu montieren. Die Hülse kann dabei neben dem Ringbund auch einen Lagersitz aufweisen, der den Lageraußenring des Lagers an seiner äußeren Umfangsfläche hält. So kann das Lager mit der axialen Abstützung in der Hülse vormontiert werden. Vorzugsweise wird auch die Mutter bereits in dem Lager montiert, so dass das Einsetzen der Hülse die Montage der gesamten Baugruppe darstellt.

Der Lagersitz für das Lager der Mutter bildet mit dem Lageraußenring eine Anlagefläche, die in Axialrichtung der Anordnung schmaler ist als der Lageraußenring selbst. Diese Anlagefläche ist in Form eines umlaufenden Stegs oder einer umlaufenden Rippe ausgeführt, die in der Ruhestellung der Anordnung etwa mittig an dem Lageraußenring anliegt. Eine solche Ausführungsform erlaubt in beschränktem Umfang Kippbewegungen des Lagers, die auch durch die axiale Abfederung mittels Wellfedern ermöglicht werden. Die Kontaktfläche zwischen dem Lageraußenring und dem Lagersitz kann alternativ auch nahezu linienförmig ausgebildet sein, wenn die Anlagefläche als Teilbereich einer konvexen, nach innen zu dem Lager aufweisenden Oberfläche des Lagersitzes ausgebildet ist, wobei wie oben die Anlagefläche umlaufend und in Axialrichtung der Anordnung ungefähr mittig an der äußeren Fläche des Lageraußenrings anliegen soll.

Nachfolgend werden Ausführungsbeispiele der Erfindung anhand der Zeichnung näher beschrieben. Es zeigen:
- Fig. 1:: die Lagerung einer Kugelmutter in einem Lenkungsgehäuse mit axialer Abstützung gegen das Gehäuse und gegen den Gehäusedeckel;
- Fig . 2:: die axiale Abstützung des Lagers in einer eingesetzten Hülse mit konvexer Gestaltung des äußeren Lagersitzes; sowie
- Fig. 3:: eine Anordung entsprechend Fig. 2 mit einer umlaufenden Rippe zur radialen Abstützung des Lageraußenrings.

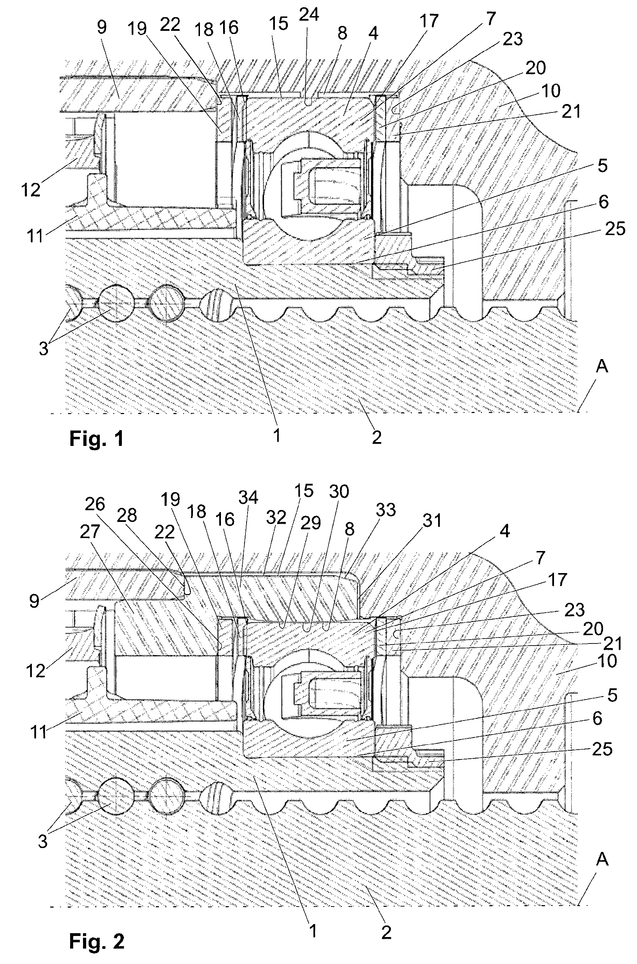

In der Fig. 1 ist ein Ausschnitt aus einer elektrisch angetriebenen Kraftfahrzeugservolenkung in einem Längsschnitt dargestellt. Der Ausschnitt zeigt die obere Hälfte eines Längsschnitts entlang der Symmetrieachse A in einem Bereich, in dem eine Kugelmutter 1 mit einer Gewindespindel 2 in Eingriff steht. Zwischen der Kugelmutter 1 und der Gewindespindel 2 sind Kugeln 3 eines Kugelumlaufs in an sich bekannter Weise angeordnet.

Die Kugelmutter 1 ist in einem Lager 4 drehbar gelagert. Das Lager 4 weist einen Innenring 5 auf, der fest auf einem Lagersitz 6 der Kugelmutter 1 sitzt. Das Lager 4 weist weiter einen Außenring 7 auf, der in einem Lagersitz 8 eines Gestells angeordnet ist. Das Gestell umfasst bei dieser Ausführungsform ein in diesem Bereich etwa rohrförmig ausgebildetes Lenkungsgehäuse 9, welches von einem Gehäusedeckel 10 verschlossen ist. Der Gehäusedeckel 10 umgreift das Lenkungsgehäuse 9 an seiner Außenseite und wird mittels nicht dargestellter Befestigungsmittel an dem Lenkungsgehäuse 9 befestigt.

Die Kugelmutter 1 trägt weiter eine Zwischenhülse 11, auf der eine Riemenscheibe 12 eines Zahnriemenantriebs drehfest befestigt ist. Im Zusammenhang der vorliegenden Erfindung ist die Aufnahme des Lageraußenrings 7 in dem Lagersitz 8 und insbesondere die Abstützung in Axialrichtung der Längsachse A von Bedeutung. Diese wird nachfolgend näher beschrieben.

Der Lageraußenring 7 ist, wie bei Wälzlagern üblich, mit einer äußeren Umfangsfläche 15, einer ersten Stirnseite 16 und einer zweiten Stirnseite 17 versehen. An der ersten Stirnseite 16 liegt eine Wellfeder 18 an, die sich gegen eine Anlaufscheibe 19 abstützt. Entsprechend stützt sich die zweite Stirnseite 17 gegen eine Wellfeder 20 ab, die wiederum sich in Axialrichtung der Längsachse A gegen eine Anlaufscheibe 21 abstützt. Die Wellfedern 18 und 20 sind ringförmige Federn, die einen etwa gleichförmigen Radius aufweisen, der vorzugsweise mit dem Radius des Lageraußenrings 7 übereinstimmt. Die Wellfedern 18 und 20 sind nicht eben, sondern weisen in der Seitenansicht entsprechend Fig. 1 eine wellenförmige Gestalt auf. Diese wellenförmige Gestalt erlaubt es, die Wellfedern 18 und 20 in Axialrichtung zwischen dem Lageraußenring 7 und den Anlaufscheiben 19 bzw. 21 zu komprimieren. Dabei tritt eine elastische Verformung ein, die reversibel ist und im Ruhezustand den Lageraußenring 7, wie in der Figur 1 dargestellt ist, mittig zwischen den Anlaufscheiben 19 und 21 positioniert. Die Wellfedern 18 und 20 sind also einfache, erprobte Bauteile, die auch durch hohe Last in Axialrichtung nicht zerstört werden. Die Anlaufscheiben 19 und 21 sind Stahlringe, die vorzugsweise gehärtet sind. Diese Stahlringe sind geeignet, die im Betrieb geringfügige Bewegung der Wellfedern 18 und 20 aufzunehmen, ohne dass sich die ebenfalls aus hartem Material gefertigten Wellfedern in die Anlaufscheiben 19 und 21 einarbeiten. Die Anlaufscheiben 19 und 21 sind deshalb besonders vorteilhaft dann einzusetzen, wenn das Gestell (hier das Lenkungsgehäuse 9 und der Gehäusedeckel 10) aus einer Leichtmetalllegierung oder einem ähnlichen, relativ weichen Material gefertigt ist.

Die dargestellte Konstruktion sieht vor, dass die Anlaufscheibe 19 unmittelbar an einer Stirnseite 22 des Lenkungsgehäuses 9 anliegt. Die zweite Anlaufscheibe 21 liegt entsprechend an einem Ringbund 23 des Gehäusedeckels 10 an, der im eingebauten Zustand der Stirnseite 22 in einem Abstand gegenüber liegt. In Radialrichtung stützt sich der Lageraußenring 7 mit seiner äußeren Umfangsfläche 15 an einem Steg 24 ab, der umlaufend in dem Lagersitz 8 ausgebildet ist. Der Steg 24 bildet mit dem Lageraußenring 7 eine schmale, ringförmig umlaufende Anlagefläche, die ein Verkippen des Lageraußenrings 7 gegenüber dem Lagersitz 8 im geringen Umfang ermöglicht.

Schließlich ist der Lagerinnenring 5 in seinem Lagersitz 6 durch eine Gewindemutter 25 gesichert, die auf ein entsprechendes Gewinde der Mutter 1 aufgeschraubt ist.

Zur Montage wird zunächst die Baugruppe montiert, die mit der Mutter 1 drehfest ist. Diese Baugruppe umfasst die Hülse 11 und die Riemenscheibe 12 sowie das Lager 4. Diese Baugruppe wird dann mit der Wellfeder 18 und der Anlaufscheibe 19 zusammen in das Lenkungsgehäuse 9 eingeführt, bis die Anlaufscheibe 19 auf der Stirnseite 22 des Lenkungsgehäuses 9 aufliegt. Die Gewindespindel 2 kann vor oder nach diesem Montagevorgang in die Mutter 1 eingespindelt werden. Danach werden die Wellfeder 20 und die Anlaufscheibe 21 auf den Lageraußenring 7 aufgelegt und der Gehäusedeckel 10 wird aufgesetzt und in einem nicht dargestellten Flanschbereich an dem Gehäuse 9 befestigt.

Im Betrieb kann nun ein elektrischer Servomotor über einen Riementrieb die Riemenscheibe 12 und damit die Mutter 1 in Drehung versetzen, wodurch über die Kugeln 3 die Gewindespindel 2 in eine Axialbewegung versetzt wird, die letztlich die Lenkbewegung für das Kraftfahrzeug bewirkt. Die Kugelmutter 1 kann sich in dem Lagersitz 8 in der beschriebenen Weise in Axialrichtung gegen die Rückstellkraft der Wellfedern 18 und 20 bewegen. Die schmale Anlagefläche im Bereich des Stegs 24 erlaubt auch eine leichte Kippbewegung. Dadurch können dynamische Belastungen aufgefangen werden, die ohne diese spezielle Lagerung zu einer hohen Belastung der Mutter 1 und der Gewindespindel 2 im Bereich der Kugeln 3 führen würde.

Eine andere Ausführungsform der Erfindung ist in Figur 2 dargestellt. Gleiche oder gleichwirkende Bauelemente tragen gleiche Bezugsziffern. Das Lager 4 ist bei der Ausführungsform gemäß Fig. 2 kleiner ausgelegt. Sein äußerer Lagerring 7 stützt sich wie in der Fig. 1 in Axialrichtung nach rechts über die Wellfeder 20 und die Anlaufscheibe 21 gegen den Ringbund 23 des Gehäusedeckels 10 ab. In der entgegengesetzten Axialrichtung stützt sich der Lageraußenring 7 mit seiner Stirnseite 16 über die Wellfeder 18 und die Anlaufscheibe 19 gegen einen Ringbund 26 ab, der in einer Hülse 27 ausgebildet ist. Die Hülse 27 ist ein im Wesentlichen rohrförmiges Bauteil, das in mehrere Abschnitte gegliedert ist, die nachfolgend beschrieben werden.

Die Hülse 27 weist einen inneren Durchmesser auf, der so groß ist, dass die Kugelmutter, die Zwischenhülse 11 und die Gewindemutter 25 durch die Hülse 27 geführt werden können. Ein erster Abschnitt, der in der Fig. 2 links dargestellt ist, weist einen Außendurchmesser auf, der dem Innendurchmesser des Lenkungsgehäuses 9 entspricht. Die Hülse 27 kann mit diesem Abschnitt in das Lenkungsgehäuse 9 eingeführt werden. Anschließend an diesen Abschnitt erweitert sich der Außendurchmesser der Hülse 27 in einem Ringbund 28, so dass der Ringbund 28 an der Stirnseite 22 des Lenkungsgehäuses 9 anliegen kann. Der in einem weiteren Abschnitt vergrößerte Außendurchmesser der Hülse 27 entspricht etwa dem Außendurchmesser des Lenkungsgehäuses 9 und dem Innendurchmesser des Deckels 10 in diesem Bereich, wobei zwischen der Hülse 27 und dem Gehäusedeckel 10 ein Spalt vorgesehen ist.

Bei dem Ringbund 26 in Fig. 2, an dem die Anlaufscheibe 19 anliegt, vergrößert sich der Innendurchmesser der Hülse 27 von einem Wert, der dem Innendurchmesser der Anlaufscheibe 19 entspricht, auf einen Innendurchmesser, der größer als derjenige der Anlaufscheibe 19 und auch größer als derjenige der Wellfeder 18 ist. Die Wellfeder 18 und die Anlaufscheibe 19 können also in die Hülse 27 eingeführt werden, bis sie an dem Ringbund 26 anliegen. Der Außendurchmesser der Hülse 27 bleibt in diesem Bereich unverändert. An einer Stelle, die in Axialrichtung der Symmetrieachse A etwa mit der Position der linken Stirnseite 16 des Lageraußenrings 7 zusammenfällt, schließt ein nach innen konvexer Bereich 29 der Hülse 27 an. Der Bereich 29 ist in der Weise konvex oder ballig ausgeführt, dass in einer durchgehend konvexen Krümmung der Radius ausgehend von dem größeren Radius im Bereich der Wellfeder 18 sich kontinuierlich verkleinert bis hin zu einem minimalen Radius 30, um danach wieder zuzunehmen, etwa bis auf den Wert des größeren Innendurchmessers im Bereich der Wellfeder 18. Dieser konvexe Bereich 29 endet dort, wo auch die Hülse 27 endet. Dort ist eine Stirnseite 31 ausgebildet, die flach und eben senkrecht zu der Achse A orientiert ist. Die Außenseite der Hülse 27 weist einen rein kreiszylindrischen Abschnitt 34 auf, der mit konstantem Durchmesser in einem geringen Abstand 32 von dem Gehäusedeckel 10 verläuft und der sich mit einer Montageschräge 33 zu der Stirnfläche 31 hin verjüngt.

Der Innendurchmesser der Hülse 27 im Bereich des kleinsten Radius 30 des konvexen Bereichs 29 entspricht dem Außendurchmesser des Lageraußenrings 7. Da der Lageraußenring 7 an seiner Außenseite geometrisch einem Kreiszylinder mit konstantem Durchmesser entspricht, ist die Anlagefläche des Lageraußenrings 7 an dem konvexen Bereich 29 in der dargestellten Position nahezu linienförmig. Unter Last kann sich der Lageraußenring 7 und mit ihm das Lager 4 sowie die gesamte Anordung aus Kugelmutter 1, Kugeln 3 und Gewindespindel 2 gegen die Rückstellkraft der Wellfedern 18 und 20 in Richtung der Achse A bewegen. Der Lageraußenring 7 kann aber auch auf Grund der linienförmigen Anlage an dem konvexen Bereich 29 in beschränktem Umfang verkippt werden. Es ist deshalb gewährleistet, dass dynamische Belastungen auf die Mutter 1 durch eine gewisse Beweglichkeit des Lagers 4 in ihren Belastungsspitzen neutralisiert werden können.

Die Ausführungsform gemäß Fig. 2 hat gegenüber der Ausführung aus Fig. 1 den Vorteil, dass das Lager 4 kleiner dimensioniert werden kann und dass vor allen Dingen durch die Hülse 27 die gesamte Baugruppe weiter vormoniert werden kann. Insbesondere kann die Hülse 27 vor dem Einsetzen in das Lenkungsgehäuse 9 bereits die Wellfeder 18 und die Anlaufscheibe 19 sowie das Lager 4 mit der darin montierten Mutter 1 und gegebenenfalls der bereits eingespindelten Gewindespindel 2 aufnehmen. Das Einsetzen der Hülse 27 in das Lager 9 ist einfacher als die Montage der Ausführungsform nach Fig. 1. Der Montagevorteil überwiegt in vielen Fällen den erhöhten Aufwand für die Anfertigung der Hülse 27. Alternativ ist es denkbar und möglich, dass die Hülse 27 mit dem Abschnitt 34 in den Gehäusedeckel eingepresst ist, der Abstand 32 entsprechend nicht vorhanden ist oder mit dem entsprechenden Presssitz ausgelegt ist. Auf diese Weise kann in dieser alternativen Ausführungsform das Paket aus Lager 4 und den Wellfedern 18, 20 sowie den Anlaufscheiben 19 als vormontierte Baugruppe mit den restlichen Teilen der Kraftfahrzeugservolenkung verbaut werden. Eine vereinfachte Ausführungsform sieht vor, dass die Hülse 27 aus einer harten oder gehärteten Stahllegierung gefertigt ist. Bei dieser Ausführungsform, die nicht dargestellt ist, kann die Anlaufscheibe 19 entfallen, so dass sich die Wellfeder 18 unmittelbar gegen den Ringbund 26 der Hülse 27 abstützen kann. Bei geeigneter Materialwahl besteht nicht die Gefahr, dass sich die Wellfeder 18 mit der Zeit in das Material der Hülse 27 einarbeitet. Das Lenkungsgehäuse 9 und der Gehäusedeckel 10 können wie oben beschrieben aus einer Leichtmetalllegierung oder auch aus einem geeigneten Kunststoff gefertigt werden.

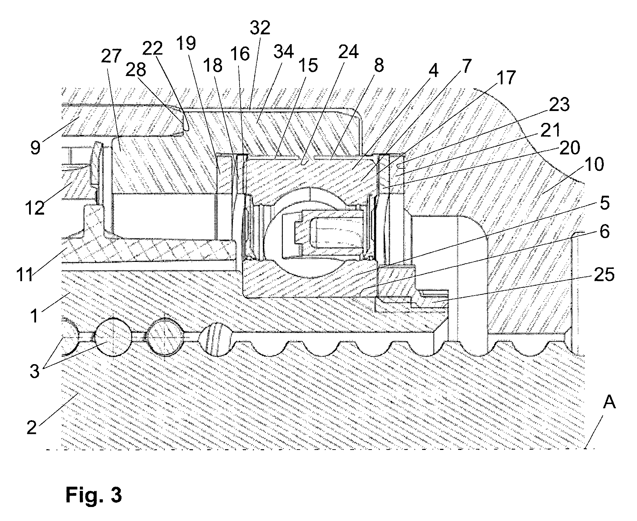

Die Fig. 3 zeigt eine dritte Ausführungsform der vorliegenden Erfindung, bei der abweichend von Fig. 1 eine Hülse 27 zur Montage des Lagers 4 in dem Lenkungsgehäuse 9 vorgesehen ist. Insoweit entspricht diese Ausführungsform der in Fig. 2 dargestellten Ausführungsform. Abweichend von Fig. 2 weist die Hülse 27 im Bereich des Lagersitzes 8 des Lagers 4 einen nach innen weisenden umlaufenden Steg 24 auf. Insoweit entspricht die Ausführungsform gemäß Fig. 3 im Bereich des Lagersitzes 8 der Ausführungsform, die zu Fig. 1 beschrieben wurde. Die Montagevorteile auf Grund der Hülse 27 ergeben sich auch bei der Ausführungsform aus Fig. 3. Der Lagersitz 8 mit dem umlaufenden Steg 24 ist jedoch einfacher zu fertigen als der in Fig. 2 dargestellte konvexe Bereich im Bereich des Lagersitzes. Der Steg 24 ist hinreichend schmal dimensioniert, um auch hier ein leichtes Kippen des Lagers 4 zu erlauben, wenn einen äußere dynamische Belastung dies erfordert.

Nur vorsorglich soll erwähnt werden, dass die rotierenden Bauteile sowie die Hülse und die Innenbereiche des Lenkungsgehäuses 9 und des Gehäusedeckels 10 sowie die Hülse 27 im Wesentlichen rotationssymmetrisch zu der Längsachse A ausgebildet sind. Die Hülse 27 kann insbesondere als Drehteil gefertigt sein.

In allen Ausführungsformen ist es denkbar und möglich, die in Reibkontakt stehenden Oberflächen mit reibungsvermindernden Oberflächen zu versehen.

### Bezugszeichenliste

- 1.: Kugelmutter
- 2.: Gewindespindel
- 3.: Kugel
- 4.: Lager
- 5.: Innenring
- 6.: Lagersitz
- 7.: Außenring
- 8.: Lagersitz
- 9.: Lenkungsgehäuse
- 10.: Gehäusedeckel
- 11.: Zwischenhülse
- 12.: Riemenscheibe
- 15.: Umfangsfläche
- 16.: Stirnseite
- 17.: Stirnseite
- 18.: Wellfeder
- 19.: Anlaufscheibe
- 20.: Wellfeder
- 21.: Anlaufscheibe
- 22.: Stirnseite
- 23.: Ringbund
- 24.: Steg
- 25.: Gewindemutter
- 26.: Ringbund
- 27.: Hülse
- 28.: Ringbund
- 29.: konvexer Bereich
- 30.: Radius
- 31.: Stirnseite
- 32.: Spalt
- 33.: Montageschräge
- 34.: Abschnitt

## Patentansprüche

1. Servolenkung, insbesondere für ein Kraftfahrzeug, mit einem Servomotor, der ein axial verlagerbares Bauelement über eine in einem Gestell (9, 10) drehbar in einem Lager (4) gelagerte Mutter (1) antreibt,
wobei die Mutter (1) mit einer an dem Bauelement ausgebildeten Gewindespindel (2) in Eingriff steht und über das Lager (4) in Axialrichtung (A) mittels Federelementen (18, 20) elastisch gegenüber dem Gestell (9, 10) sowie in Radialrichtung entlang einer schmalen umlaufenden Kontaktfläche (24, 30) zwischen einem Lageraußenring (7) und einem Lagersitz (8) an dem Gestell (9, 10) abgestützt ist,
wobei die Kontaktfläche (24, 30) in Axialrichtung (A) der Anordnung schmaler als der Lageraußenring (7) ist,
und wobei die Kontaktfläche (24) als umlaufende Rippe (24) des Lagersitzes (8) oder linienförmig mittels einer konvexen, nach innen zu dem Lager (4) weisenden Oberfläche (25) des Lagersitzes (8) ausgebildet ist, wobei zwischen den als Wellfedern ausgebildeten Federelementen (18, 20) und dem Gestell (9, 10) wenigstens eine Anlaufscheibe (19, 21) eingelegt ist.

2. Servolenkung nach Anspruch 1, **dadurch gekennzeichnet, dass** die Wellfedern (18, 20) jeweils zwischen dem Lageraußenring (7) des Lagers (4) und einem Ringbund (22, 23, 26) des Gestells (9, 10) angeordnet sind.

3. Servolenkung nach Anspruch 2, **dadurch gekennzeichnet, dass** das Gestell ein Gehäuse (9) und einen Gehäusedeckel (10) umfasst, wobei einer der Ringbunde (23) an dem Gehäusedeckel (10) ausgebildet ist und wobei der andere Ringbund (22, 26) an dem Gehäuse (9) oder an einer in das Gehäuse (9) einführbaren Hülse (27) ausgebildet ist.

4. Servolenkung nach Anspruch 3, **dadurch gekennzeichnet, dass** die Hülse (27) neben dem Ringbund (26) den Lagersitz (8) aufweist, der den Lageraußenring (7) des Lagers (4) an einer äußeren Umfangsfläche (15) hält.

## Claims

1. Servo-assisted steering system, in particular for a motor vehicle, having a servo motor, which drives an axially displaceable component via a nut (1) which is mounted in a frame (9, 10) in a rotatable manner in a bearing (4),
wherein the nut (1) engages with a threaded spindle (2) formed on the component and is supported via the bearing (4) elastically with respect to the frame (9, 10) in the axial direction (A) by means of spring elements (18, 20) and is supported on the frame (9, 10) in the radial direction along a narrow encircling contact surface (24, 30) between a bearing outer ring (7) and a bearing seat (8),
wherein the contact surface (24, 30) in the axial direction (A) of the arrangement is more narrow than the bearing outer ring (7),
and wherein the contact surface (24) is formed as a circumferential rib (24) of the bearing seat (8) or in a linear manner by means of a convex surface (25) of the bearing seat (8) pointing inwardly towards the bearing (4), wherein between the spring elements (18, 20) designed as corrugated springs and the frame (9, 10) at least one thrust washer (19, 21) is inserted.

2. Servo-assisted steering system according to Claim 1, **characterised in that** the corrugated springs (18, 20) in each case are arranged between the bearing outer ring (7) of the bearing (4) and a ring collar (22, 23, 26) of the frame (9, 10).

3. Servo-assisted steering system according to Claim 2, **characterised in that** the frame comprises a housing (9) and a housing cover (10), wherein one of the ring collars (23) is formed on the housing cover (10) and wherein the other ring collar (22, 26) is formed on the housing (9) or on a sleeve (27) which can be introduced into the housing (9).

4. Servo-assisted steering system according to Claim 3, **characterised in that** the sleeve (27) in addition to the ring collar (26) has the bearing seat (8), which holds the bearing outer ring (7) of the bearing (4) on an outer circumferential surface (15).

## Revendications

1. Servodirection, en particulier pour un véhicule automobile, avec un servomoteur qui entraîne un élément pouvant être déplacé axialement par l'intermédiaire d'un écrou (1) installé dans un palier (4) de manière à pouvoir tourner dans un châssis (9, 10),
auquel cas l'écrou (1) est en prise avec une broche filetée (2) conçue au niveau de l'élément et s'appuie au niveau du châssis (9, 10) par l'intermédiaire de palier (4), dans la direction axiale (A), au moyen d'éléments à ressort (18, 20) de manière élastique par rapport au châssis (9, 10) ainsi que dans la direction axiale le long d'une surface de contact (24, 30) périphérique étroite entre la bague extérieure de palier (7) et le siège de palier (8),
auquel cas la surface de contact (24, 30) est plus étroite dans la direction axiale (A) de l'agencement que la bague extérieure de palier (7),
et auquel cas la surface de contact (24) est conçue en tant que nervure périphérique (24) du siège de palier (8) ou linéaire à l'aide d'une surface (25) convexe du siège de palier (8) dirigée vers l'intérieur en direction du palier (4),
auquel cas au moins une rondelle de butée (19, 21) est insérée entre les éléments à ressort (18, 20), conçus en tant que ressorts ondulés, et le châssis (9, 10).

2. Servodirection selon la revendication 1, **caractérisée en ce que** les ressorts ondulés (18, 20) sont à chaque fois agencés entre la bague extérieure de palier (7) du palier (4) et un collet annulaire (22, 23, 26) du châssis (9, 10).

3. Servodirection selon la revendication 2, **caractérisée en ce que** le châssis comporte un boîtier (9) et un couvercle de boîtier (10), auquel cas un des collets annulaires (23) est conçu sur le couvercle de boîtier (10) et auquel cas l'autre collet annulaire (22, 26) est conçu sur le boîtier (9) ou sur une douille (27) susceptible de pouvoir être insérés dans le boîtier (9).

4. Servodirection selon la revendication 3, **caractérisée en ce que** la douille (27) présente, à proximié du collet annulaire (26), le siège de palier (8) qui maintient la bague extérieure de palier (7) du palier (4) sur une surface périphérique extérieure (15).
